# EUROPÄISCHE PATENTANMELDUNG

(11) **EP 4 068 578 A1**
(43) Veröffentlichungstag der Anmeldung: **05.10.2022**
(21) Anmeldenummer: 21165777.0
(22) Anmeldetag: 30.03.2021
(51) Int. Cl.: H02K 5/02, H02K 7/00, C22C 29/10, F16C 3/02, H02K 5/16

(54) **BAUTEIL FÜR EINE DYNAMOELEKTRISCHE MASCHINE**

(71) Anmelder: Siemens Aktiengesellschaft, 80333 München (DE)
(72) Erfinder: Vollmer, Rolf, 36129 Gersfeld (DE); Zisler, Michael, 97717 Euerdorf-Wirmsthal (DE)

(57) **Zusammenfassung**

Die Erfindung betrifft ein Bauteil (1) für eine dynamoelektrische Maschine (12), insbesondere dynamoelektrische rotatorische Maschine, wobei das Bauteil (1) ein keramisches Material aufweist, wobei das Bauteil (1) ein E-Modul von wenigstens 150 GPa aufweist. Die Erfindung betrifft ferner eine dynamoelektrische Maschine (12) sowie ein Verfahren zur Herstellung eines Bauteils (1).

## Beschreibung

Die Erfindung betrifft ein Bauteil für eine dynamoelektrische Maschine, eine dynamoelektrische Maschine sowie ein Verfahren zur Herstellung eines Bauteils.

Elektromotoren für den Einsatz in Robotern müssen leicht und steif sein und eine hohe Leistung aufweisen.

Um eine gewünschte Steifigkeit zu erreichen, werden oft Metalle wie Stahl - beispielsweise bei Wellen - und Aluminium - beispielsweise bei Lagerschild und Gehäuse - eingesetzt. Jedoch ist dies hinsichtlich eines Gewichts nicht optimal.

Der Erfindung liegt die Aufgabe zugrunde, Elektromotoren dahingehend zu verbessern.

Die Lösung der Aufgabe gelingt durch Anspruch 1, d.h. ein Bauteil für eine dynamoelektrische Maschine, insbesondere dynamoelektrische rotatorische Maschine, wobei das Bauteil ein keramisches Material aufweist, wobei das Bauteil ein E-Modul von wenigstens 150 GPa, aufweist

Das angegebene E-Modul bezieht sich auf ein E-Modul bei 20°C.

Das Bauteil eignet sich besonders gut für Motoren in Roboterantrieben. Auch andere Anwendungen sind möglich.

Vorteilhaft ist eine Ausführungsform, wonach das Bauteil ein E-Modul von wenigstens 250 GPa, insbesondere 300 GPa, aufweist.

Die Vorteile der Ausführungsform sind einerseits höhere Steifigkeiten und andererseits die Möglichkeit, das Bauteil filigraner konstruieren zu können.

Für eine Maschine mit dem Bauteil sind somit geringere Drehmomentwelligkeiten, geringere Schwingungsamplituden und geringere Geräuschemissionen erreichbar.

Ein derartiges Bauteil hat eine geringere Masse und Massenträgheit im Vergleich zu konventionellen Bauteilen.

Vorteilhaft ist eine Ausführungsform, wonach ein Materialanteil des keramischen Materials bezüglich eines Gesamtmaterialanteils des Bauteils wenigstens 90%, vorzugsweise wenigstens 95%, beträgt.

Es ist vorteilhaft das ganze Bauteil aus Keramik herzustellen bzw. wenigstens 99%.

Im Maschinenbau ist es häufig erforderlich, enge Toleranzen zu haben. Die Herstellung enger Toleranzen erfolgt vorzugsweise durch Zerspanung, die bei metallischen Bauteilen besonders einfach möglich ist. Daher und wegen einer höheren Duktilität, kann es vorteilhaft sein, eine Kombination aus Metall und Keramik einzusetzen.

Vorteilhaft ist eine Ausführungsform, wonach das Bauteil aus dem keramischen Material besteht.

Vorteilhaft ist eine Ausführungsform, wonach das keramische Material Siliziumnitrid ist.

Siliziumnitrid ermöglicht im Vergleich mit Stahl eine ähnliche Steifigkeit des Bauteils bei einem geringeren Gewicht. So können leichte Bauteile geschaffen werden.

Vorteilhaft ist eine Ausführungsform, wonach das Bauteil eine Struktur aufweist, wobei die Struktur dergestalt ist, dass wenigstens ein Hohlraum wenigstens teilweise von Material umgeben ist.

Vorteilhaft ist eine Ausführungsform, wonach die Struktur dergestalt ist, dass eine Mehrzahl an mehreckigen Hohlräumen wenigstens teilweise von Material umschlossen ist.

Die Struktur kann eine Wabenstruktur sein. Die Struktur kann eine Gitterstruktur sein.

Die Struktur wird in der Figurenbeschreibung näher erläutert.

Vorteilhaft ist eine Ausführungsform, wonach der Hohlraum vollständig von Material umschlossen ist.

Dies ist einerseits vorteilhaft, da eventuell vorhandenes granulares Material nicht entweichen kann.

Andererseits wird eine verbesserte Stabilität erreicht.

Vorteilhaft ist eine Ausführungsform, wonach der Hohlraum wenigstens teilweise mit granularem Material gefüllt ist.

Der Hohlraum kann ganz oder teilweise mit granularem Material gefüllt sein. Dies wirkt sich positiv auf eine Schwingungsdämpfung aus.

Vorteilhaft ist eine Ausführungsform, wonach das granulare Material Wolframcarbid aufweist.

Wolframcarbid eignet sich besonders wegen einer hohen Dichte und hohen Festigkeit. Dadurch können selbst kleine Mengen zu hoher Dämpfung führen. Die hohe Festigkeit führt zudem zu einer hohen Lebensdauer.

Zudem bietet dieses Material Vorteile bei der Herstellung, da es eine andere sogenannte Sintertemperatur aufweist als Siliziumnitrid.

Vorteilhaft ist eine Ausführungsform, wonach der Hohlraum als Tetraeder ausgebildet ist.

So ist eine sehr stabile Struktur mit hoher Festigkeit und guter Steifigkeit möglich.

Vorteilhaft ist eine Ausführungsform, wonach das Bauteil eine Welle oder ein Lager oder ein Lagerschild oder ein Gehäuse ist.

Auch andere Bauteile sind denkbar.

Die Lösung der oben gestellten Aufgabe gelingt ferner durch Anspruch 13, d.h. eine dynamoelektrische Maschine, insbesondere zum Antrieb eines Roboterarms, aufweisend wenigstens ein derartiges Bauteil.

Die dynamoelektrische Maschine ist vorteilhaft eine dynamoelektrische rotatorische Maschine.

Vorteilhaft ist eine Ausführungsform, wonach die dynamoelektrische Maschine wenigstens teilweise von einem Gehäuse umgeben ist.

Die Lösung der Aufgabe gelingt ferner durch Anspruch 16, d.h. einen Roboter, aufweisend eine derartige dynamoelektrische Maschine.

Das Gehäuse kann ein erfindungsgemäßes Bauteil aufweisen oder das erfindungsgemäße Bauteil sein.

Die Lösung gelingt zudem durch Anspruch 14, d.h. ein Verfahren zur Herstellung eines Bauteils mit folgenden Schritten:
- Aufbringen einer ersten Suspension, aufweisend wenigstens ein Bindemittel und keramische Festteilchen, durch eine erste Schablone auf eine Grundfläche zum Erhalt eines ersten Grünkörpers,
- Aufbringen einer zweiten Suspension, aufweisend wenigstens ein Bindemittel und keramische Festteilchen und weitere Festteilchen, durch eine zweite Schablone auf eine Grundfläche zum Erhalt eines zweiten Grünkörpers, wobei die weiteren Festteilchen hitzebeständiger als die keramischen Festteilchen sind,
- Austreiben des Bindemittels aus dem ersten Grünkörper und/oder dem zweiten Grünkörper, insbesondere mittels Entbinderung,
- Schaffen eines dauerhaften Zusammenhalts der keramischen Festteilchen durch Erwärmung und/oder mittels Verdichtung, insbesondere mittels Sinterung.

Die keramischen Festteilchen sind vorteilhaft Siliziumnitrid-Teilchen.

Die weiteren Festteilchen sind vorteilhaft Wolframcarbid-Teilchen. Jedoch sind auch andere Teilchen aus einem Material denkbar, insbesondere Teilchen, die eine andere Sintertemperatur als die keramischen Festteilchen aufweisen.

Um Wolframcarbid z.B. oberflächlich zum Schmelzen zu bringen, zusammenwachsen zu lassen und somit zu verfestigen, wird eine Temperatur von mehr als 2500°C, insbesondere 3000°C, benötigt.

Siliziumnitrid wird vorteilhaft bei Temperaturen kleiner 1800°C gesintert. Der wesentliche Vorteil gegenüber vielen anderen Keramiken, insbesondere gegenüber Wolframcarbid, ist eine geringe Dichte. Damit eignet es sich hervorragend für den Leichtbau.

Die Entbinderung gelingt vorteilhaft bei 300 bis 600°C.

Alternativ gelingt die Lösung der Aufgabe durch Anspruch 15, d.h. ein Verfahren zur Herstellung eines Bauteils mit folgenden Schritten:
- Aufbringen einer ersten Suspension, aufweisend wenigstens ein Bindemittel und keramische Festteilchen, durch eine erste Schablone auf eine Grundfläche zum Erhalt eines ersten Grünkörpers,
- Aufbringen der ersten Suspension durch die erste Schablone auf eine Grundfläche zum Erhalt eines zweiten Grünkörpers,
- Austreiben des Bindemittels aus dem ersten Grünkörper und/oder dem zweiten Grünkörper, insbesondere mittels Entbinderung,
- Schaffen eines dauerhaften Zusammenhalts der keramischen Festteilchen des ersten und/oder zweiten Grünkörpers durch Erwärmung und/oder mittels Verdichtung, insbesondere mittels Sinterung,
- Einbringen von weiteren Festteilchen, insbesondere in Form granularen Materials, in einen Hohlraum und/oder eine Öffnung und/oder eine Aussparung des ersten und/oder zweiten Grünkörpers.

Es ist also möglich, die Struktur zusammen mit einer Füllung Schicht für Schicht herzustellen. Es ist überdies möglich, zuerst die Struktur herzustellen und anschließend die Füllung einzubringen.

Im Folgenden wird die Erfindung anhand der in den Figuren dargestellten Ausführungsbeispiele näher beschrieben und erläutert. Es zeigen:
- FIG 1: das erfindungsgemäße Bauteil am Beispiel einer Welle im Längsschnitt,
- FIG 2: eine weitere Ansicht der Welle im Querschnitt,
- FIG 3: eine weitere Ansicht der Welle in räumlicher Darstellung,
- FIG 4: eine dynamoelektrische rotatorische Maschine,
- FIG 5: ein erfindungsgemäßes Verfahren,
- FIG 6: ein alternatives erfindungsgemäßes Verfahren.

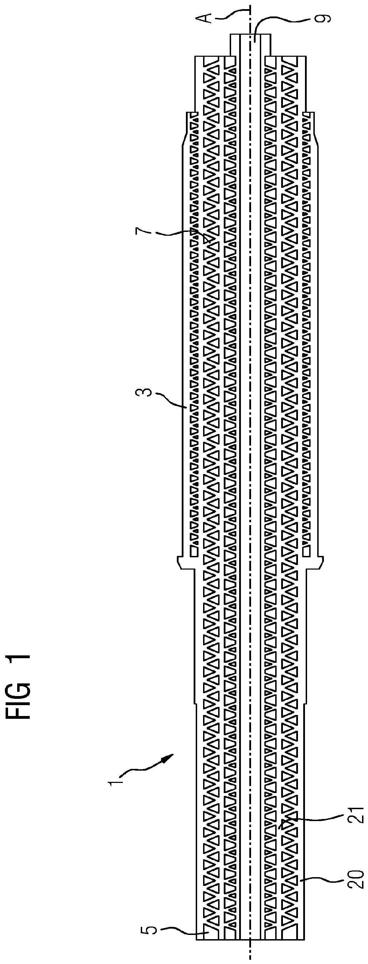

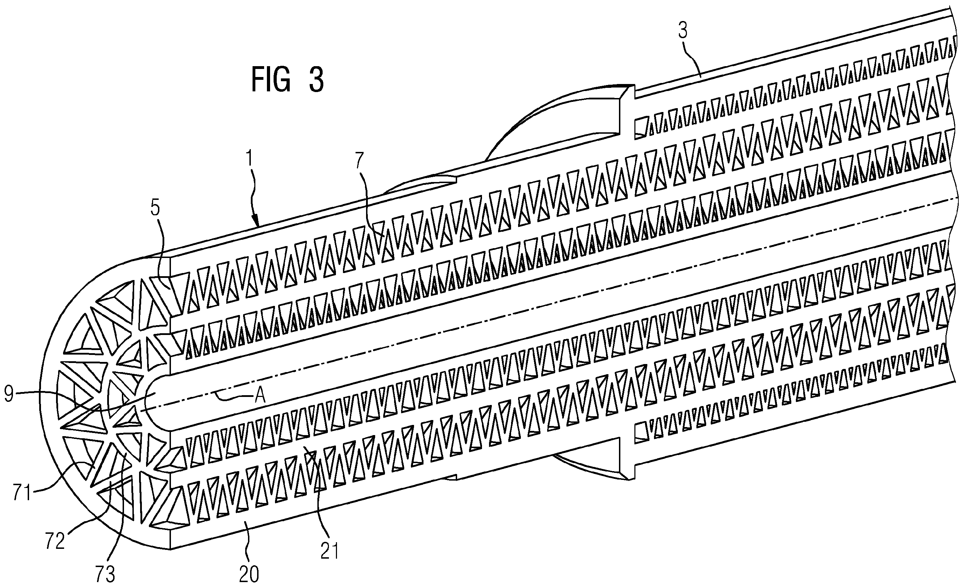

FIG 1 zeigt das erfindungsgemäße Bauteil am Beispiel einer Welle 1 im Längsschnitt. FIG 3 ist eine weitere Ansicht.

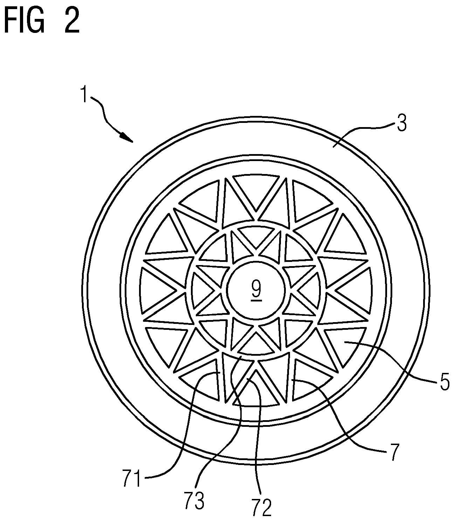

In FIG 2 ist eine weitere Ansicht der Welle 1 im Querschnitt dargestellt.

Das Bauteil kann eine Welle 1 sein oder ein Lager oder ein Lagerschild oder ein Gehäuse.

Die Erfindung ist beispielhaft an der Welle 1 gezeigt.

Die Figur zeigt eine Rotationsachse A. Die Welle 1 ist in der Figur als Hohlwelle ausgebildet und weist hierzu einen Hohlraum 9 auf. Dieser Hohlraum 9 erstreckt sich in der Figur parallel zur Rotationsachse A.

Die Welle 1 weist eine Struktur auf, wobei die Struktur dergestalt ist, dass wenigstens ein Hohlraum wenigstens teilweise von Material umgeben ist.

Die Struktur ist vorteilhaft dergestalt, dass eine Mehrzahl an mehreckigen Hohlräumen 5 wenigstens teilweise von Material umschlossen ist. In der Figur ist das umschließende Material als Steg 7 bzw. als eine Mehrzahl an Stegen 7 ausgebildet.

Die Struktur kann eine Wabenstruktur sein. Die Struktur kann auch eine Gitterstruktur sein.

Die Figur zeigt ein bevorzugtes Beispiel für die Struktur. Die Struktur ist in zwei Ringe 20, 21 gegliedert, die um den Hohlraum 9 ausgebildet sind. Ein Hohlraum 5 weist in zweidimensionaler Sicht drei Ecken auf, der durch Stege 7 begrenzt ist (siehe FIG 2).

Die Stege 71 und 72 sind stirnseitig betrachtet in der Figur mit Schenkeln eines gedachten gleichschenkligen Dreiecks kongruent, also deckungsgleich bzw. gleichförmig. Die Stege 71 und 72 können auch mit Schenkeln eines gedachten gleichseitigen Dreiecks kongruent sein.

Ein Abschnitt des Rings 73 (auch eine Form des Stegs 7) stellt die Basis des gedachten Dreiecks dar, folgt jedoch der Rundung des Rings 20 bzw. 21.

In der Figur sind die Hohlräume 5 derart angeordnet, dass abwechselnd ein Hohlraum vom Ring 20 begrenzt wird und der benachbarte Hohlraum vom Ring 21.

Die dreidimensionale Anschauung wird durch FIG 3 verdeutlicht. Der Hohlraum 5 ist in der Figur als Tetraeder ausgebildet.

Ein Tetraeder, auch Vierflächner oder Vierflach, ist einem Fachmann als ein Körper mit vier dreieckigen Seitenflächen bekannt. Die Figur zeigt, dass der Hohlraum 5 diese Form aufweist.

So kann ein besonders stabiles Bauteil bei geringem Materialeinsatz und somit geringem Gewicht gebildet werden.

In einer vorteilhaften Ausführungsform sind die Hohlräume 5 mit granularem Material gefüllt. Dies wirkt sich z. B. positiv auf eine Schwingungsdämpfung aus.

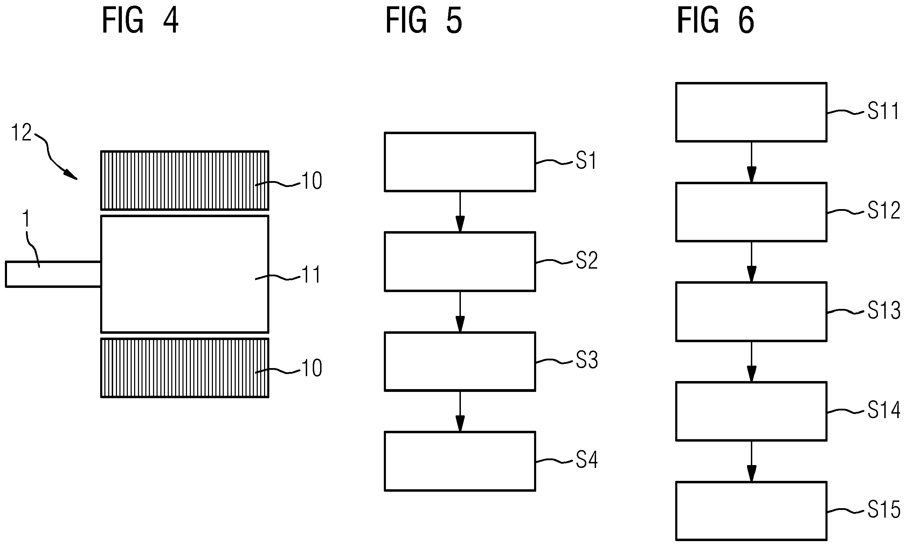

FIG 4 zeigt eine dynamoelektrische rotatorische Maschine 12, aufweisend einen Stator 10 und einen Rotor 11. Ferner ist die Welle 1 gezeigt.

Für Motoren für Roboter ist die Maschine 12 vorzugsweise als permanenterregte Synchronmaschine ausgebildet.

Die Permanentmagnete (nicht dargestellt) sind vorteilhaft auf einer Rotoroberfläche angeordnet. So kann eine hochdynamische Maschine 12 geschaffen werden.

FIG 5 zeigt ein erfindungsgemäßes Verfahren.

Das Verfahren zur Herstellung eines Bauteils weist folgende Schritte auf:
In einem Verfahrensschritt S1 erfolgt ein Aufbringen einer ersten Suspension, aufweisend wenigstens ein Bindemittel und keramische Festteilchen, durch eine erste Schablone auf eine Grundfläche zum Erhalt eines ersten Grünkörpers.

In einem Verfahrensschritt S2 erfolgt ein Aufbringen einer zweiten Suspension, aufweisend wenigstens ein Bindemittel und keramische Festteilchen und weitere Festteilchen, durch eine zweite Schablone auf eine Grundfläche zum Erhalt eines zweiten Grünkörpers, wobei die weiteren Festteilchen hitzebeständiger als die keramischen Festteilchen sind.

In einem Verfahrensschritt S3 erfolgt ein Austreiben des Bindemittels aus dem ersten Grünkörper und/oder dem zweiten Grünkörper, insbesondere mittels Entbinderung.

In einem Verfahrensschritt S4 erfolgt ein Schaffen eines dauerhaften Zusammenhalts der keramischen Festteilchen durch Erwärmung und/oder mittels Verdichtung, insbesondere mittels Sinterung.

Der erste Grünkörper und/oder der zweite Grünkörper, aufweisend die keramischen Festteilchen, bilden somit vorteilhaft die Struktur.

Die weiteren Festteilchen bilden das granulare Material.

Vorteilhaft werden die Grünkörper in einem Sintervorgang gesintert. Insbesondere, wenn granulares Material, insbesondere Pulver, in Kavitäten enthalten sein soll, ist meist eine Abweichung der Sintertempertauren nötig, damit das granulare Material nicht agglomeriert. Das ist bei der Kombination Siliziumnitrid (Si3N4) und Wolframcarbid (WC) gegeben.

Mehrmaliges Sintern ist möglich, wird jedoch vorteilhaft mit anderen Zielen angewendet, z.B. um engere Toleranzen zu erzeugen, Vorspannungen zu erzeugen oder um geringere Porositäten zu erhalten.

FIG 6 zeigt ein alternatives erfindungsgemäßes Verfahren.

Alternativ ist das folgende Verfahren zur Herstellung:

Im Verfahrensschritt S11 erfolgt ein Aufbringen einer ersten Suspension, aufweisend wenigstens ein Bindemittel und keramische Festteilchen, durch eine erste Schablone auf eine Grundfläche zum Erhalt eines ersten Grünkörpers.

In einem Verfahrensschritt S12 erfolgt ein Aufbringen der ersten Suspension durch die erste Schablone auf eine Grundfläche zum Erhalt eines zweiten Grünkörpers.

In einem Verfahrensschritt S13 erfolgt ein Austreiben des Bindemittels aus dem ersten Grünkörper und/oder dem zweiten Grünkörper, insbesondere mittels Entbinderung.

In einem Verfahrensschritt S14 erfolgt ein Schaffen eines dauerhaften Zusammenhalts der keramischen Festteilchen des ersten und/oder zweiten Grünkörpers durch Erwärmung und/oder mittels Verdichtung, insbesondere mittels Sinterung.

In einem Verfahrensschritt S15 erfolgt ein Einbringen von weiteren Festteilchen, insbesondere in Form granularen Materials, in einen Hohlraum und/oder eine Öffnung und/oder eine Aussparung des ersten und/oder zweiten Grünkörpers.

Die beiden Verfahren können auch kombiniert werden.

Z.B. kann ein Teil des Bauteils mit den Verfahrensschritten S1 bis S4 hergestellt werden und ein weiterer Teil des Bauteils mit den Verfahrensschritten S11 bis S15.

## Patentansprüche

1. Bauteil (1) für eine dynamoelektrische Maschine (12), insbesondere dynamoelektrische rotatorische Maschine, wobei das Bauteil (1) ein keramisches Material aufweist, wobei das Bauteil (1) ein E-Modul von wenigstens 150 GPa, aufweist.

2. Bauteil (1) nach Anspruch 1, aufweisend ein E-Modul von wenigstens 250 GPa, insbesondere 300 GPa.

3. Bauteil (1) nach einem der vorhergehenden Ansprüche, wobei ein Materialanteil des keramischen Materials bezüglich eines Gesamtmaterialanteils des Bauteils wenigstens 90%, vorzugsweise wenigstens 95%, beträgt.

4. Bauteil (1) nach einem der vorhergehenden Ansprüche, wobei das Bauteil (1) aus dem keramischen Material besteht.

5. Bauteil (1) nach einem der vorhergehenden Ansprüche, wobei das keramische Material Siliziumnitrid ist.

6. Bauteil (1) nach einem der vorhergehenden Ansprüche, wobei das Bauteil (1) eine Struktur (7) aufweist, wobei die Struktur (7) dergestalt ist, dass wenigstens ein Hohlraum (5) wenigstens teilweise von Material umgeben ist.

7. Bauteil (1) nach einem der vorhergehenden Ansprüche, wobei die Struktur (7) dergestalt ist, dass eine Mehrzahl an mehreckigen Hohlräumen (5) wenigstens teilweise von Material umschlossen ist.

8. Bauteil (1) nach einem der Ansprüche 6 oder 7, wobei der Hohlraum (5) vollständig von Material umschlossen ist.

9. Bauteil (1) nach einem der Ansprüche 6 bis 8, wobei der Hohlraum (5) wenigstens teilweise mit granularem Material gefüllt ist.

10. Bauteil (1) nach Anspruch 9, wobei das granulare Material Wolframcarbid aufweist.

11. Bauteil (1) nach einem der Ansprüche 6 bis 10, wobei der Hohlraum (5) als Tetraeder ausgebildet ist.

12. Bauteil (1) nach einem der vorhergehenden Ansprüche, wobei das Bauteil (1) eine Welle oder ein Lager oder ein Lagerschild oder ein Gehäuse ist.

13. Dynamoelektrische Maschine (12), insbesondere zum Antrieb eines Roboterarms, aufweisend wenigstens ein Bauteil (1) nach einem der Ansprüche 1 bis 12.

14. Verfahren zur Herstellung eines Bauteils (1), insbesondere nach einem der Ansprüche 1 bis 13, mit folgenden Schritten:
- Aufbringen einer ersten Suspension, aufweisend wenigstens ein Bindemittel und keramische Festteilchen, durch eine erste Schablone auf eine Grundfläche zum Erhalt eines ersten Grünkörpers,
- Aufbringen einer zweiten Suspension, aufweisend wenigstens ein Bindemittel und keramische Festteilchen und weitere Festteilchen, durch eine zweite Schablone auf eine Grundfläche zum Erhalt eines zweiten Grünkörpers, wobei die weiteren Festteilchen hitzebeständiger als die keramischen Festteilchen sind,
- Austreiben des Bindemittels aus dem ersten Grünkörper und/oder dem zweiten Grünkörper, insbesondere mittels Entbinderung,
- Schaffen eines dauerhaften Zusammenhalts der keramischen Festteilchen durch Erwärmung und/oder mittels Verdichtung, insbesondere mittels Sinterung.

15. Verfahren zur Herstellung eines Bauteils (1), insbesondere nach einem der Ansprüche 1 bis 13, mit folgenden Schritten:
- Aufbringen einer ersten Suspension, aufweisend wenigstens ein Bindemittel und keramische Festteilchen, durch eine erste Schablone auf eine Grundfläche zum Erhalt eines ersten Grünkörpers,
- Aufbringen der ersten Suspension durch die erste Schablone auf eine Grundfläche zum Erhalt eines zweiten Grünkörpers,
- Austreiben des Bindemittels aus dem ersten Grünkörper und/oder dem zweiten Grünkörper, insbesondere mittels Entbinderung,
- Schaffen eines dauerhaften Zusammenhalts der keramischen Festteilchen des ersten und/oder zweiten Grünkörpers durch Erwärmung und/oder mittels Verdichtung, insbesondere mittels Sinterung,
- Einbringen von weiteren Festteilchen, insbesondere in Form granularen Materials, in einen Hohlraum und/oder eine Öffnung und/oder eine Aussparung des ersten und/oder zweiten Grünkörpers.

16. Roboter, aufweisend eine dynamoelektrische Maschine (12) nach Anspruch 13.
